# EUROPÄISCHE PATENTSCHRIFT

(11) **EP 1 446 310 B1**
(45) Veröffentlichungstag und Bekanntmachung des Hinweises auf die Patenterteilung: **15.03.2006**
(21) Anmeldenummer: 02792775.5
(22) Anmeldetag: 18.11.2002
(51) Int. Cl.: B60T 7/12, B60T 8/24

(54) **VERFAHREN UND SYSTEM ZUR STEUERUNG EINER BREMSAUSRÜSTUNG**
METHOD AND SYSTEM FOR CONTROLLING A BRAKE INSTALLATION
PROCEDE ET SYSTEME POUR COMMANDER UNE INSTALLATION DE FREIN

(30) Priorität: 20.11.2001 DE 10156815
(43) Veröffentlichungstag der Anmeldung: 18.08.2004
(73) Patentinhaber: Lucas Automotive GmbH, 56070 Koblenz (DE)
(72) Erfinder: ENDRES, Franz-Josef, 56244 Sessenhausen (DE)
(74) Vertreter: Schmidt, Steffen J.
(86) Internationale Anmeldenummer: PCT/EP2002/012922
(87) Internationale Veröffentlichungsnummer: WO 2003/043861

(56) Entgegenhaltungen:
- DE-A- 4 421 088
- DE-A- 10 063 061
- DE-A- 19 525 552
- DE-A- 19 630 870
- DE-A- 19 825 642
- DE-A- 19 849 799
- DE-A- 19 901 581
- DE-A- 19 931 345
- DE-A- 19 950 034
- DE-A- 19 962 556

## Beschreibung

### Gebiet der Erfindung

Die vorliegende Erfindung betrifft ein Verfahren und ein System zur Steuerung einer Bremsausrüstung mit einer Funktion zur Anfahrunterstützung eines Kraftfahrzeugs. Insbesondere betrifft die vorliegende Erfindung ein Verfahren und ein System, bei denen Betriebszustände des Fahrzeugs sowie ein Steuerparameter erfasst werden, um die Bremsausrüstung des Kraftfahrzeugs so zu steuern, dass die Funktion zur Anfahrunterstützung zu- oder abgeschaltet wird.

### Hintergrund der Erfindung

Üblicherweise wird die Bremsausrüstung eines Kraftfahrzeugs oder Teile der Bremsausrüstung auch bei Stillstand des Kraftfahrzeugs betrieben, um dieses im Stillstand zu halten. Im allgemeinen wird hierfür eine Feststellbremseinrichtung, die typischerweise von einem Fahrzeugführer betätigt wird, oder eine Bremsausrüstung verwendet, die gesteuert für den Stillstand erforderliche Bremskräfte erzeugt.

Zum Anfahren des Kraftfahrzeugs ist es erforderlich, die im Stillstand erzeugten Bremskräfte abzubauen.

### Stand der Technik

Bei herkömmlichen von einem Fahrzeugführer zu bedienenden Bremsausrüstungen ist es erforderlich, dass der Fahrzeugführer neben den für ein Anfahren erforderlichen Maßnahmen auch Maßnahmen ergreift, um die Bremse (Feststellbremse) zu lösen.

Um einen Fahrzeugführer beim Anfahren eines Kraftfahrzeugs zu unterstützen, ist es aus der DE-OS-24 20 252 bekannt, die Feststellbremse eines Kraftfahrzeugs in Abhängigkeit einer Stellung eines Gaspedals zu deaktivieren. Hierbei wird die Feststellbremse, die im Stillstand eine fest vorgegebene Bremskraft erzeugt, deaktiviert, um die fest vorgegebene Bremskraft abzubauen, sobald das Gaspedal betätigt wird.

Aus der DE 36 18 532 A1 ist eine Anfahrhilfe für ein Kraftfahrzeug an einer Steigung bekannt. Hierbei weist eine Bremsanlage ein zwischen dem Hauptbremszylinder und den Radbremszylindern angeordnetes Ventil auf, welches im Stillstand zur Aufrechterhaltung eines Bremsbetätigungsdruckes geschlossen ist und zur Aufhebung des Bremsbetätigungsdruckes geöffnet wird, um ein Anfahren des Kraftfahrzeugs zuzulassen. Wenn das Kraftfahrzeug aus dem Stillstand in einen Fahrzustand gebracht werden soll, wird überprüft, ob das von einem Fahrzeugführer vorgegebene Motordrehmoment einem für das Anfahren benötigten Anfahrdrehmoment entspricht. Hierbei wird das benötigte Anfahrdrehmoment in Abhängigkeit eines aktuellen Neigungswinkels des Fahrzeugs an einer Steigung und des Fahrzeuggewichts ermittelt.

Alternativ ist es bei dieser Anfahrhilfe vorgesehen, auf Antriebsräder des Kraftfahrzeugs einwirkende Drehmomente zu erfassen. Wenn auf die Antriebsräder wirkende Drehmomente groß genug sind, um die von den Radbremszylindem erzeugten Bremsdrehmomente und das durch eine Steigung hervorgerufene Rückrolldrehmoment zu überwinden, wird das Ventil geöffnet, um den im Stillstand erzeugten Bremsbetätigungsdruck aufzuheben.

Die DE 199 62 556 A1 zeigt eine elektrische Feststellbremse, bei der die Funktion "Lösen" beim Aufahren nicht nur über einen mechanischen Tacter, sondern auch durch ein Betätigen eines Pedalwertgebers möglich ist.

Ein grundlegendes Problem dieser bekannten Systemebesteht darin, dass die Funktion zur Anfahrunterstützung grundsätzlich aktiviert, die Anfahrhilfe jedoch nicht in allen Fahrsituationen erwünscht ist. Beispielsweise kann es bei einem Anfahrvorgang in einer Steigung oder in einem Gefälle mit einem angehängten Anhänger oder bei einem Einparkvorgang in einer Steigung oder in einem Gefälle durch den automatischen Abbau des Bremsdrucks zu unerwünschten Fahrzuständen kommen.

### Aufgabe der Erfindung

Aufgabe der vorliegenden Erfindung ist es, ein Verfahren und ein System zur Steuerung einer Bremsausrüstung mit einer Funktion zur Anfahrunterstützung eines Kraftfahrzeugs bereitzustellen, die eine situationsabhängige Aktivierung bzw. Deaktivierung der Anfahrhilfe durch den Fahrzeugführer ermöglichen.

### Kurzbeschreibung der Erfindung

Zur Lösung dieser Aufgabe stellt die Erfindung ein Verfahren zur Steuerung einer Bremsausrüstung mit einer Funktion zur Anfahrunterstützung eines Kraftfahrzeugs bereit. Bei dem erfindungsgemäßen Verfahren wird ein Ausgangsbetriebszustand der Bremsausrüstung festgelegt, in dem die Anfahrhilfe wahlweise entweder zu- oder abgeschaltet ist. Eine derartige Festlegung des Ausgangsbetriebszustandes kann beispielsweise mittels eines vom Fahrer zu betätigenden Schalters oder durch Spracheingabe erfolgen. Weiterhin wird ein Betriebszustand des Kraftfahrzeugs erfasst, in dem sich das Kraftfahrzeug im oder nahe dem Stillstand befindet. Dieser Zustand (Stillstand oder annähernd Schrittgeschwindigkeit) des Kraftfahrzeugs kann beispielsweise ermittelt werden, indem Fahrzeugbewegungen erfasst und mit Fahrzeugbewegungen verglichen werden, die auftreten können, wenn sich das Kraftfahrzeug in einem Fahrzustand befindet. Fehlen solche fahrtypischen Bewegungen, wird davon ausgegangen, dass sich das Fahrzeug im oder nahe dem Stillstand befindet. Wenn sich das Fahrzeug in diesem Zustand befindet und zusätzlich ein charakteristischer, vom Fahrzeugführer beeinflussbarer Steuerparameter erfasst wird, wird eine Bremsausrüstung in Reaktion auf die Erfassung des Steuerparameters gesteuert, um durch Zu- oder Abschalten der Funktion zur Anfahrunterstützung einen von dem Ausgangsbetriebszustand abweichenden Betriebszustand der Bremsausrüstung herzustellen. Wenn demnach die Anfahrhilfe im Ausgangsbetriebszustand der Bremsausrüstung abgeschaltet war, wird sie in Reaktion auf die Erfassung des Steuerparameters zugeschaltet. Wenn sie dagegen zugeschaltet war, wird sie wird sie in Reaktion auf die Erfassung des Steuerparameters abgeschaltet. Das erfindungsgemäße Verfahren ermöglicht es, dass ein Fahrer situationsabhängig und je nach Bedarf flexibel zwischen einem Betriebszustand der Bremsausrüstung mit zugeschalteter Anfahrhilfe und einem Betriebszustand der Bremsausrüstung mit abgeschalteter Anfahrhilfe wechseln kann.

Der charakteristische Steuerparameter ist vorzugsweise ein vom Fahrzeugführer ausgelöster Bremsdruckverlauf. Der Fahrer kann dann die Anfahrhilfe in einfacher Weise, beispielsweise durch ein kurzes "Nachtreten" des Bremspedals, ab- oder zuschalten.

Der als Steuerparameter dienende Bremsdruckverlauf kann mittels eines Bremsdrucksensors erfasst werden. Derartige Bremsdrucksensoren sind in mit elektronischen Fahrwerkregefsystemen wie z.B. einem elektronischen Stabilitätsprogramm (ESP) oder einer elektrohydraulischen Bremse (EHB) ausgerüsteten Fahrzeugen bereits vorhanden, so dass auf den Einbau zusätzlicher Sensoren verzichtet werden kann.

Die Bremsausrüstung kann so gesteuert werden, dass nach einer Herstellung eines von dem Ausgangsbetriebszustand abweichenden Betriebszustands durch Zu- oder Abschalten der Funktion zu Anfahrunterstützung des Kraftfahrzeugs und nach einer Erfassung eines Anfahrvorgangs wieder der Ausgangsbetriebszustand der Bremsausrüstung hergestellt wird. Der Fahrer kann dann den von ihm bevorzugten Ausgangsbetriebszustand festlegen und die Anfahrhilfe in einer bestimmten Fahrsituation je nach Bedarf einmalig aktivieren oder deaktivieren. Anschließend kehrt das System automatisch wieder in seinen festgelegten Ausgangsbetriebszustand zurück.

Vorzugsweise wird dem Fahrer ein aktueller Betriebszustand der Bremsausrüstung, in dem die Funktion zur Anfahrunterstützung des Kraftfahrzeugs zu- oder abgeschaltet ist, beispielsweise mittels eines akustischen oder eines optischen Signals angezeigt. Das Anzeigen des aktuellen Betriebszustands kann permanent mittels einer optischen Anzeige und/oder einmalig mittels eines akustischen oder eines optischen Signals erfolgen, wenn durch Zu- oder Abschalten der Anfahrhilfe ein Wechsel zwischen den Betriebszuständen der Bremsausrüstung erfolgt ist.

Ergänzend kann die Bremsausrüstung in Reaktion auf die Erfassung des Steuerparameters so gesteuert werden, dass eine Funktion der Bremsausrüstung aktiviert wird, durch die unabhängig von einer Betätigung der Bremsausrüstung durch den Fahrer, Bremskräfte aufgebaut werden, die das Kraftfahrzeug im Stillstand halten. Auf diese Weise kann der Fahrer gleichzeitig eine elektronische Parkbremse (EPB) aktivieren und die Anfahrhilfe zu- oder abschalten. Dies ist für den Fahrer z.B. beim Anhalten und anschließenden Anfahren in einer Steigung besonders komfortabel, da er gleichzeitig, beispielsweise durch ein "Nachtreten" des Bremspedals, die elektronische Parkbremse zum Halten des Fahrzeugs im Stillstand und die Anfahrhilfe zum Abbau der Bremskraft während des anschließenden Anfahrvorgangs aktivieren kann.

Ferner stellt die Erfindung ein System zur Steuerung einer Bremsausrüstung mit einer Funktion zur Anfahrunterstützung eines Kraftfahrzeugs bereit. Das erfindungsgemäße System umfasst eine Steuereinrichtung sowie mehrere Erfassungseinrichtungen (Sensoren) zur Erfassung von Betriebszustände des Kraftfahrzeugs charakterisierenden Parametern sowie eines durch den Fahrer beeinflussbaren Steuerparameters, wobei die Steuereinrichtung gemäß eines der zuvor genannten Verfahren betrieben wird.

### Kurzbeschreibung der Figuren

In der folgenden Beschreibung wird auf die beigefügten Figuren Bezug genommen, wobei
- Fig. 1: eine schematische Darstellung eines erfindungsgemäßen Systems zur Steuerung einer Bremsausrüstung mit einer Funktion zur Anfahrunterstützung eines Kraftfahrzeugs zeigt, und
- Fig. 2: ein Flussdiagramm einer Ausführungsform eines erfindungsgemäßen Verfahrens zur Steuerung einer Bremsausrüstung mit einer Funktion zur Anfahrunterstützung eines Kraftfahrzeugs zeigt.

### Beschreibung bevorzugter Ausführungsformen

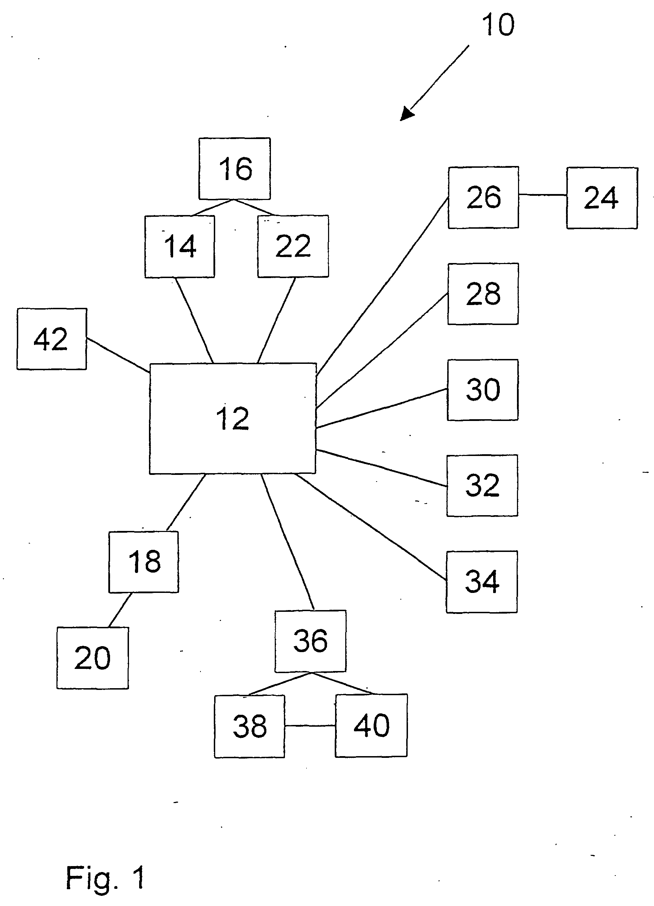

Ein in Fig. 1 dargestelltes System 10 zur Steuerung einer Bremsausrüstung mit einer Funktion zur Anfahrunterstützung eines Kraftfahrzeugs kann eine separat ausgeführte Einrichtung eines Kraftfahrzeugs sein, wenigstens teilweise schon vorhandene Komponenten weiterer Systeme des Kraftfahrzeugs verwenden oder von einem System umfasst sein, das weitere Steuerungs- und Kontrollfunktionen für das Kraftfahrzeug bereitstellt.

Das System zur Steuerung einer Bremsausrüstung mit einer Funktion zur Anfahrunterstützung eines Kraftfahrzeugs 10 weist eine Steuereinrichtung 12 auf, die über eine Schnittstelle 14 eine Bremsausrüstung 16 eines Kraftfahrzeugs steuert. Über eine Schnittstelle 18 ist eine Auswahleinrichtung 20 mit der Steuereinrichtung 12 verbunden, mittels derer ein Fahrzeugführer einen gewünschten Ausgangsbetriebszustand der Bremsausrüstung 16 festlegen kann. Die Bremsausrüstung 16 wird in Abhängigkeit des gewählten Ausgangsbetriebszustands von der Steuereinrichtung 12 so gesteuert, dass eine Anfahrhilfe-Funktion der Bremsausrüstung 16 wahlweise entweder zu- oder abgeschaltet ist. Der aktuelle Betriebszustand der Bremsausrüstung 16 wird von der Steuereinrichtung 12 mit Hilfe einer Bremsensensoreinrichtung 22 erfasst.

Weiterhin erfasst die Steuereinrichtung 12 zur Steuerung der Bremsausrüstung 16 mittels mehrerer im folgenden beschriebenen Einrichtungen den aktuellen Betriebszustand des Kraftfahrzeugs sowie einen durch den Fahrzeugführer beeinflussbaren Steuerparameter und ermittelt aus den von diesen Einrichtungen bereitgestellten Daten, ob die Bremsausrüstung 16 durch Zu- oder Abschalten der Funktion zur Anfahrunterstützung des Kraftfahrzeugs in einen von dem Ausgangsbetriebszustand abweichenden Betriebszustand gebracht werden soll.

Zur Erfassung eines Betriebszustands einer Zündanlage 24 des Kraftfahrzeugs, ist eine mit der Steuereinrichtung 12 und der Zündanlage 24 verbundene Sensoreinrichtung 26 vorhanden.

Ferner ist die Steuereinrichtung 12 mit einem Geschwindigkeitssensor 28 zur Erfassung der aktuellen Fahrzeuggeschwindigkeit, einem Raddrehzahlsensor 30 zur Erfassung von Drehzahlen einzelner oder mehrerer Räder, und einem Fahrzeugneigungssensor 32 zur Erfassung der aktuellen Neigung des Kraftfahrzeugs in dessen Längsrichtung verbunden.

Über eine Schnittstelle 34 empfängt die Steuereinrichtung 12 von weiteren Komponenten (nicht gezeigt) des Kraftfahrzeugs bereitgestellte Daten, die zusätzlich zu den oben genannten Betriebsgrößen weitere Informationen über den Zustand des Fahrzeugs liefern. Beispiele hierfür sind Informationen, die fehlerfreie und/oder fehlerhafte Betriebszustände eines Fahrzeugmotormanagementsystems, eines Antiblockiersystems (ABS) und von Systemen zur Traktions- und Stabilitätskontrolle (z.B. ESP, ASR, ASD) charakterisieren den Reifenluftdruck einzelner oder mehrerer Reifen und verfügbare Mengen an Betriebsstoffen (z.B. Getriebeöl, Motoröl) angeben.

Eine weitere Sensoreinrichtung 36 ist mit einem Bremspedal 38 und, falls vorhanden, mit einem Bremspedalschalter 40 verbunden, um Stellungen und/oder Bewegungen des Bremspedals 38 und dessen Betätigung zu ermitteln.

Um dem Fahrzeugführer den aktuellen Betriebszustand der Bremsausrüstung 16 anzuzeigen, ist eine von der Steuereinrichtung 12 gesteuerte Anzeigeneinrichtung 42 vorhanden. Die Anzeigeneinrichtung 42 ist so ausgestaltet, dass sie zur Anzeige des aktuellen Betriebszustands der Bremsausrüstung 16 ein permanentes optisches Signal liefert und dem Fahrzeugführer zusätzlich einen Wechsel zwischen verschiedenen Betriebszuständen der Bremsausrüstung 16 durch ein einmaliges optisches oder akustisches Signal anzeigt.

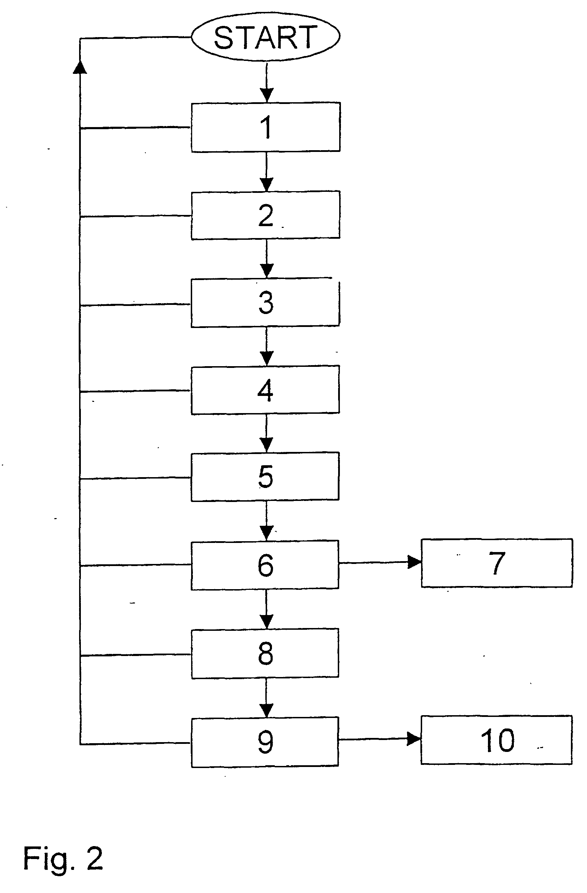

Unter Bezugnahme auf das in Fig. 2 dargestellte Flussdiagramm wird im folgenden der Betrieb des Systems 10 zur Steuerung einer Bremsausrüstung 16 mit einer Funktion zur Anfahrunterstützung eines Kraftfahrzeugs beschrieben.

Um die Bremsausrüstung 16 des Kraftfahrzeugs so zu steuern, dass ein situationsabhängiges Zu- oder Abschalten der Anfahrhilfe-Funktion durch den Fahrzeugführer möglich ist, ist zunächst eine Festlegung eines Ausgangsbetriebszustands der Bremsausrüstung 16 erforderlich, in dem die Anfahrhilfe-Funktion wahlweise entweder zu- oder abgeschaltet ist. Hierfür wählt der Fahrer in Schritt 1 über die in Fig. 1 gezeigte Auswahleinrichtung 20 aus, ob die Anfahrhilfe-Funktion der Bremsausrüstung 16 im Ausgangsbetriebszustand zu- oder abgeschaltet sein soll.

Anschließend ist zu ermitteln, ob sich das Kraftfahrzeug im oder nahe dem Stillstand befindet. Hierfür wird in Schritt 2 überprüft, ob die Zündanlage 24 eingeschaltet ist. Unter einem eingeschalteten Zustand der Zündung 24 wird in diesem Zusammenhang nicht nur der Betriebszustand des Kraftfahrzeugs verstanden, in dem dessen Motor läuft, sondern auch Betriebszustände, in denen der Start des Motors möglich ist. Der letztgenannte Fall betrifft Kraftfahrzeuge, bei denen der Motor im Stillstand und/oder im Fahrbetrieb automatisch abgeschaltet wird, wenn keine Motorkraft benötigt wird (z.B. beim Ausrollenlassen des Fahrzeugs). Ein eingeschalteter Zustand der Zündung 24 liegt in diesem Fall dann vor, wenn der Motor, beispielsweise durch Betätigung eines Gaspedals, wieder gestartet werden kann.

In Schritt 3 wird mittels des Geschwindigkeitssensors 28 die aktuelle Fahrzeuggeschwindigkeit erfasst, um festzustellen, ob sich das Fahrzeug (mit mehr als Schrittgeschwindigkeit) bewegt oder steht. Wenn die detektierte Fahrzeuggeschwindigkeit annähernd Null ist, wird in Schritt 4 mittels des Neigungssensors 32 festgestellt, ob sich das Fahrzeug tatsächlich im Stillstand befindet.

Im allgemeinen weist ein Kraftfahrzeug im Fahrbetrieb hierfür charakteristische dynamische Bewegungen auf. Dementsprechend kann festgestellt werden, ob sich ein Kraftfahrzeug im oder nahe dem Stillstand befindet oder nicht, wenn Bewegungen des Kraftfahrzeugs nicht den für den Fahrbetrieb typischen Bewegungen entsprechen.

Mit dem Neigungssensor 32 werden aktuelle Neigungen des Kraftfahrzeugs, genauer Neigungsänderungen um dessen Querachse ("Nickbewegungen") detektiert. Liegen die erfaßten Fahrzeugbewegungen in einem Bereich, in dem fahrtypische Fahrzeugbewegungen liegen können, ist davon auszugehen, daß sich das Kraftfahrzeug nicht im Stillstand befindet. Demgegenüber kann festgestellt werden, daß sich das Kraftfahrzeug im oder nahe dem Stillstand befindet, wenn die erfaßten Fahrzeugbewegungen nicht in dem Bereich der fahrtypischen Bewegungen liegen.

Wird in Schritt 4 das Fehlen fahrtypischer Fahrzeugbewegungen ermittelt, wird in Schritt 5 mittels der Sensoreinrichtung 36 ein charakteristischer Bremsdruckverlauf detektiert. Der charakteristische Bremsdruckverlauf wird durch ein kurzes "Nachtreten" des Fahrers auf das Bremspedal 38 ausgelöst.

Falls in Schritt 2 festgestellt wird, dass die Zündanlage 24 nicht eingeschaltet ist, in den Schritten 3 und/oder 4 festgestellt wird, dass sich das Fahrzeug nicht im oder nahe dem Stillstand befindet, oder keine Erfassung des charakteristischen Steuerparameters gemäß Schritt 5 erfolgt, wird das Verfahren zur Steuerung des Systems 10 nach den jeweiligen Schritten beendet.

Wenn die genannten Bedingungen jedoch erfüllt sind, steuert die Steuereinrichtung 12 die Bremsausrüstung 16 in Schritt 6, so dass durch Zu- oder Abschalten der Anfahrhilfe-Funktion ein von dem Ausgangsbetriebszustand abweichender Betriebszustand der Bremsausrüstung 16 hergestellt wird. Wenn in Schritt 1 festgelegt wurde, dass die Anfahrhilfe-Funktion im Ausgangsbetriebszustand der Bremsausrüstung 16 abgeschaltet ist, wird diese Funktion in Schritt 6 zugeschaltet und wenn in Schritt 1 festgelegt wurde, dass die Anfahrhilfe-Funktion im Ausgangsbetriebszustand der Bremsausrüstung 16 zugeschaltet ist, wird sie in Schritt 6 abgeschaltet.

In Schritt 6 kann die Bremsausrüstung 16 auch so gesteuert werden, dass zusätzlich oder alternativ zu einer Zuschaltung der Anfahrhilfe-Funktion eine Aktivierung einer Funktion der Bremsausrüstung 16 erfolgt, durch die unabhängig von einer Betätigung der Bremsausrüstung 16 durch den Fahrer ein Bremsdruck aufgebaut wird, der geeignet ist, das Kraftfahrzeug im Stillstand zu halten. Die Einstellung des von der Bremsausrüstung 16 aufzubauenden Bremsdrucks kann auf unterschiedliche Weise vorgenommen werden. Die Bremsausrüstung 16 kann so gesteuert werden, daß sie bei jeder derartigen Aktivierung einen vorgegebenen Bremsdruck erzeugt, oder einen Bremsdruck erzeugt, der in Abhängigkeit der im oder nahe dem Stillstand mit dem Neigungssensor 32 erfaßten Neigung des Kraftfahrzeuges festgelegt wird. Als Richtwert kann auch eine durch eine Feststellbremseinrichtung erzeugte Klemmkraft verwendet werden, die beispielsweise in Abhängigkeit des Fahrzeugtyps, in dem das System 10 verwendet wird, mehr als zwei Drittel der maximal möglichen Klemmkraft betragen soll.

In Schritt 7 wird dem Fahrzeugführer mittels der Anzeigeeinrichtung 42 der Wechsel des Betriebszustands der Bremsausrüstung 16 signalisiert.

Nach dem Wechsel des Betriebszustands der Bremsausrüstung 16 wird in Schritt 8 eine Anfahrerkennung durchgeführt. Hierfür wird mittels des Raddrehzahlsensors 30 die Drehzahl einzelner oder mehrerer Räder ermittelt. Wenn anhand der Radbewegungen, z.B. bei Erreichen einer vorbestimmten Raddrehzahl, ein Anfahrvorgang des Kraftfahrzeugs detektiert wird, wird die Bremsausrüstung 16 von der Steuereinrichtung 12 in Schritt 9 so gesteuert, dass durch Zu- oder Abschalten der Funktion zur Anfahrunterstützung des Kraftfahrzeugs und/oder der Funktion der Bremsausrüstung 16, durch die unabhängig von einer Betätigung der Bremsausrüstung 16 durch den Fahrer ein Bremsdruck aufgebaut wird, der geeignet ist, das Kraftfahrzeug im Stillstand zu halten, wieder der Ausgangsbetriebszustand der Bremsausrüstung 16 hergestellt. Der Wechsel des Betriebszustands der Bremsausrüstung 16 gemäß Schritt 6 aktiviert bzw. deaktiviert demnach die entsprechenden Funktionen der Bremsausrüstung 16 nur für einen Anfahrvorgang.

Der Wechsel des Betriebszustands der Bremsausrüstung 16 in den Ausgangsbetriebszustand wird dem Fahrzeugführer in Schritt 10 wiederum mittels der Anzeigeeinrichtung 42 signalisiert.

## Patentansprüche

1. Verfahren zum Steuern einer Bremsausrüstung (16) mit einer Funktion zur Anfahrunterstützung eines Kraftfahrzeugs mit den folgenden Schritten:
- Auswählen eines Ausgangsbetriebszustands der Bremsausrüstung (16), in dem die Funktion zur Anfahrunterstützung des Kraftfahrzeugs wahlweise zu- oder abgeschaltet ist,
- Erfassen eines charakteristischen, durch einen Fahrzeugführer beeinflussbaren Steuerparameters,
- Steuern der Bremsausrüstung (16) in Reaktion auf die Erfassung des Steuerparameters, um durch Zu- oder Abschalten der Funktion zur Anfahrunterstützung des Kraftfahrzeugs einen von dem Ausgangsbetriebszustand abweichenden Betriebszustand der Bremsausrüstung herzustellen, und
- die Herstellung des von dem Ausgangsbetriebszustand abweichenden Betriebszustands der Bremsausrüstung (16), wobei,
-- falls ausgewählt wurde, dass die Funktion zur Anfahrunterstützung des Kraftfahrzeugs im Ausgangsbetriebszustand der Bremsausrüstung (16) abgeschaltet ist, diese Funktion zugeschaltet wird, und
-- falls ausgewählt wurde, dass die Funktion zur Anfahrunterstützung des Kraftfahrzeugs im Ausgangsbetriebszustand der Bremsausrüstung 16 zugeschaltet ist, diese Funktion abgeschaltet wird,
nur in Reaktion auf die Erfassung eines Betriebszustands des Kraftfahrzeugs erfolgt, in dem sich das Kraftfahrzeug im oder nahe dem Stillstand befindet.

2. Verfahren nach Anspruch 1,
**dadurch gekennzeichnet, dass** der charakteristische Steuerparameter ein durch, den Fahrzeugführer ausgelöster, charakteristischer Bremsdruckverlauf ist.

3. Verfahren nach Anspruch 2
**dadurch gekennzeichnet, dass** der Bremsdruckverlauf mittels eines Bremsdrucksensors (36) erfasst wird.

4. Verfahren nach einem der vorhergehenden Ansprüche,
**gekennzeichnet durch** den Schritt:
- Steuern der Bremsausrüstung (16), um nach einer Herstellung des von dem Ausgangsbetriebszustand abweichenden Betriebszustands der Bremsausrüstung **durch** Zu- oder Abschalten der Funktion zur Anfahrunterstützung des Kraftfahrzeugs und nach einer Erfassung eines Anfahrvorgangs wieder den Ausgangsbetriebszustand der Bremsausrüstung (16) herzustellen.

5. Verfahren nach einem der vorhergehenden Ansprüche,
**gekennzeichnet durch** den Schritt:
- Anzeigen eines aktuellen Betriebszustands der Bremsausrüstung (16), In dem die Funktion zur Anfahrunterstützung des Kraftfahrzeugs zu- oder abgeschaltet ist.

6. Verfahren nach Anspruch 5,
**dadurch gekennzeichnet, dass** das Anzeigen des aktuellen Betriebszustandes der Bremsausrüstung (16) mittels eines akustischen oder eines optischen Signals erfolgt.

7. Verfahren nach einem der vorhergehenden Ansprüche,
**gekennzeichnet durch** den Schritt:
- Steuern der Bremsausrüstung (16) In Reaktion auf die Erfassung des Steuerparameters, so dass eine Funktion der Bremsausrüstung (16) aktiviert wird, **durch** die unabhängig von einer Betätigung der Bremsausrüstung (16) **durch** den Fahrzeugführer Bremskräfte aufgebaut werden, die das Kraftfahrzeug im Stillstand halten.

8. System zur Steuerung einer Bremsausrüstung (16) mit einer Funktion zur Anfahrunterstützung eines Kraftfahrzeugs mit:
- einer Steuereinrichtung (12) und
- Erfassungseinrichtungen (26, 28, 30, 32, 36) zur Erfassung von Betriebszustände des Kraftfahrzeugs charakterisierenden Parametern sowie eines durch einen Fahrzeugführer beeinflussbaren Steuerparameters, wobei die Steuereinrichtung (12) dazu ausgelegt ist, folgende Schritte auszuführen:
- Auswählen eines Ausgangsbetriebszustands der Bremsausrüstung (16), in dem die Funktion zur Anfahrunterstützung des Kraftfahrzeugs wahlweise zu- oder abgeschaltet ist,
- Erfassen eines charakteristischen, durch einen Fahrzeugführer beeinflussbaren Steuerparameters,
- Steuern der Bremsausrüstung (16) in Reaktion auf die Erfassung des Steuerparameters, um durch Zu- oder Abschalten der Funktion zur Anfahrunterstützung des Kraftfahrzeugs einen von dem Ausgangsbetriebszustand abweichenden Betriebszustand der Bremsausrüstung herzustellen, und
- die Herstellung des von dem Ausgangsbetriebszustand abweichenden Betriebszustands der Bremsausrüstung (16), wobei,
- falls ausgewählt wurde, dass die Funktion zur Anfahrunterstützung des Kraftfahrzeugs Im Ausgangsbetriebszustand der Bremsausrüstung (16) abgeschaltet ist, diese Funktion zugeschaltet wird, und
-- falls ausgewählt wurde, dass die Funktion zur Anfahrunterstützung des Kraftfahrzeugs im Ausgangsbetriebszustand der Bremsausrüstung 16 zugeschaltet ist, diese Funktion abgeschaltet wird,
nur in Reaktion auf die Erfassung eines Betriebszustands des Kraftfahrzeugs erfolgt, in dem sich das Kraftfahrzeug im oder nahe dem Stillstand befindet.

9. System nach Anspruch 8,
**dadurch gekennzeichnet, dass** die Erfassungseinrichtung (36) zur Erfassung des durch einen Fahrzeugführer beeinflussbaren Steuerparameters ein Bremsdrucksensor ist.

10. System nach Anspruch 8 oder 9,
**gekennzeichnet durch** eine Anzeigevorrichtung (42) zum Anzeigen eines aktuellen Betriebszustandes der Bremsausrüstung (10).

## Claims

1. Method for controlling braking equipment (16) with a function for the driveaway assistance of a motor vehicle having the following steps:
- selecting an initial operating state of the braking equipment (16) in which the function for the driveaway assistance of the motor vehicle is selectively switched on or off;
- detecting a characteristic control parameter capable of being influenced by a vehicle driver;
- controlling the braking equipment (16) in reaction to the detection of the control parameter, in order, by switching on or off the function for the driveaway assistance of the motor vehicle, to produce an operating state of the braking equipment differing from the initial operating state, and
- producing the operating state of the braking equipment (16) differing from the initial operating state, where,
-- if the selection was that the function for the driveaway assistance of the motor vehicle is switched off in the initial operating state of the braking equipment (16), this function is switched on, and
-- if the selection was that the function for the driveaway assistance of the motor vehicle is switched on in the initial operating state of the braking equipment (16), this function is switched off,
takes place only in reaction to the detection of an operating state of the motor vehicle in which the motor vehicle is stationary or nearly stationary.

2. Method according to Claim 1, **characterised in that** the characteristic control parameter is a characteristic brake-pressure curve initiated by the vehicle driver.

3. Method according to Claim 2, **characterised in that** the brake-pressure curve is detected by means of a brake-pressure sensor (36).

4. Method according to one of the preceding claims, **characterised by** the step of:
- controlling the braking equipment (16) in order, after producing the operating state of the braking equipment differing from the initial operating state by switching on or off the function for the driveaway assistance of the motor vehicle and after detection of a driveaway procedure, to restore the initial operating state of the braking equipment (16).

5. Method according to one of the preceding claims, **characterised by** the step of:
- indicating a current operating state of the braking equipment (16) in which the function for the driveaway assistance of the motor vehicle is switched on or off.

6. Method according to Claim 5, **characterised in that** the current operating state of the braking equipment (16) is indicated by means of an acoustic or visual signal.

7. Method according to one of the preceding claims, **characterised by** the step of:
- controlling the braking equipment (16) in reaction to the detection of the control parameter such that a function of the braking equipment (16) is activated by means of which, independently of the braking equipment (16) being actuated by the vehicle driver, braking forces are built up which keep the motor vehicle stationary.

8. System for controlling braking equipment (16) with a function for the driveaway assistance of a motor vehicle, comprising:
- a control device (12) and
- detecting devices (26, 28, 30, 32, 36) for detecting parameters characterising operating states of the motor vehicle and also a control parameter capable of being influenced by a vehicle driver, the control device (12) being designed to carry out the following steps:
- selecting an initial operating state of the braking equipment (16) in which the function for the driveaway assistance of the motor vehicle is selectively switched on or off;
- detecting a characteristic control parameter capable of being influenced by a vehicle driver;
- controlling the braking equipment (16) in reaction to the detection of the control parameter, in order, by switching on or off the function for the driveaway assistance of the motor vehicle, to produce an operating state of the braking equipment differing from the initial operating state, and
- producing the operating state of the braking equipment (16) differing from the initial operating state, where,
-- if the selection was that the function for the driveaway assistance of the motor vehicle is switched off in the initial operating state of the braking equipment (16), this function is switched on, and
-- if the selection was that the function for the driveaway assistance of the motor vehicle is switched on in the initial operating state of the braking equipment (16), this function is switched off,
takes place only in reaction to the detection of an operating state of the motor vehicle in which the motor vehicle is stationary or nearly stationary.

9. System according to Claim 8, **characterised in that** the detecting device (36) for detecting the control parameter capable of being influenced by a vehicle driver is a brake-pressure sensor.

10. System according to Claim 8 or 9, **characterised by** an indicating device (42) for indicating a current operating state of the braking equipment (10).

## Revendications

1. Procédé pour commander une installation de frein (16), comprenant une fonction d'aide au démarrage pour un véhicule automobile et se composant des étapes suivantes :
- sélection d'un état de fonctionnement de départ de l'installation de frein (16) par activation ou par désactivation sélective de la fonction d'aide au démarrage du véhicule automobile,
- détection d'un paramètre de commande caractéristique influençable par un conducteur,
- commande de l'installation de frein (16) en réaction au paramètre de commande détecté pour établir, par activation ou par désactivation de la fonction d'aide au démarrage du véhicule automobile, un état de fonctionnement de l'installation de frein différent de l'état de fonctionnement de départ, et
- établissement de l'état de fonctionnement différent de l'état de fonctionnement de départ de l'installation de frein (16),
-- la fonction d'aide au démarrage du véhicule étant alors activée si la sélection opérée a consisté à désactiver ladite fonction à l'état de fonctionnement de départ de l'installation de frein (16), et
-- la fonction d'aide au démarrage du véhicule étant alors désactivée si la sélection opérée a consisté à activer ladite fonction à l'état de fonctionnement de départ de l'installation de frein (16),
seulement en réaction à la détection d'un état de fonctionnement du véhicule, dans lequel le véhicule est immobilisé ou quasiment immobilisé.

2. Procédé selon la revendication 1,
**caractérisé en ce que** le paramètre de commande caractéristique consiste en une allure de la pression de freinage déclenchée par le conducteur.

3. Procédé selon la revendication 2,
**caractérisé en ce que** l'allure de la pression de freinage est détectée par un capteur de pression de freinage (36).

4. Procédé selon l'une des revendications précédentes,
**caractérisé par** l'étape suivante :
- commande de l'installation de frein (16) pour rétablir l'état de fonctionnement de départ de l'installation de frein (16) après établissement d'un état de fonctionnement différent de l'état de fonctionnement de départ par activation ou désactivation de la fonction d'aide au démarrage du véhicule et après détection d'une manoeuvre de démarrage.

5. Procédé selon l'une des revendications précédentes,
**caractérisé par** l'étape suivante :
- signalisation d'un état de fonctionnement actuel de l'installation de frein (16), dans lequel la fonction d'aide au démarrage du véhicule est activée ou désactivée.

6. Procédé selon la revendication 5,
**caractérisé en ce que** la signalisation de l'état de fonctionnement actuel de l'installation de frein (16) s'effectue à l'aide d'un signal acoustique ou d'un signal optique.

7. Procédé selon l'une des revendications précédentes,
**caractérisé par** l'étape suivante
- commande de l'installation de frein (16) en réaction au paramètre de commande détecté si bien qu'il y a activation d'une fonction de l'installation de frein (16) entraînant, indépendamment d'un actionnement de l'installation de frein (16) par le conducteur, la production de forces de freinage qui maintiendront le véhicule immobilisé.

8. Système pour commander une installation de frein (16), comprenant une fonction d'aide au démarrage pour un véhicule automobile et composé de :
- un dispositif de commande (12) et
- des dispositifs de détection (26, 28, 30, 32, 36) servant à détecter des paramètres caractérisant des états de fonctionnement du véhicule et un paramètre de commande influençable par un conducteur, le dispositif de commande (12) étant conçu pour exécuter les étapes suivantes :
- sélection d'un état de fonctionnement de départ de l'installation de frein (16) par activation ou par désactivation sélective de la fonction d'aide au démarrage du véhicule automobile,
- détection d'un paramètre de commande caractéristique influençable par un conducteur,
- commande de l'installation de frein (16) en réaction au paramètre de commande détecté pour établir, par activation ou par désactivation de la fonction d'aide au démarrage du véhicule automobile, un état de fonctionnement de l'installation de frein différent de l'état de fonctionnement de départ, et
- établissement de l'état de fonctionnement différent de l'état de fonctionnement de départ de l'installation de frein (16),
-- la fonction d'aide au démarrage du véhicule étant alors activée si la sélection opérée a consisté à désactiver ladite fonction à l'état de fonctionnement de départ de l'installation de frein (16), et
-- la fonction d'aide au démarrage du véhicule étant alors désactivée si la sélection opérée a consisté à activer ladite fonction à l'état de fonctionnement de départ de l'installation de frein (16),
seulement en réaction à la détection d'un état de fonctionnement du véhicule, dans lequel le véhicule est immobilisé ou quasiment immobilisé.

9. Système selon la revendication 8,
**caractérisé en ce que** le dispositif de détection (36) servant à détecter le paramètre de commande influençable par un conducteur est un capteur de pression de freinage.

10. Système selon la revendication 8 ou 9,
**caractérisé par** un dispositif de signalisation (42) servant à signaler un état de fonctionnement actuel de l'installation de frein (10).
